# DEMANDE DE BREVET EUROPEEN

(11) **EP 3 756 452 A2**
(43) Date de publication de la demande: **30.12.2020**
(21) Numéro de dépôt: 20182669.0
(22) Date de dépôt: 26.06.2020
(51) Int. Cl.: A01G 9/24, A01G 9/26, H05B 3/14

(54) **DISPOSITIF DE CHAUFFAGE RADIANT POUR PLANTS VÉGÉTAUX**

(30) Priorité: 27.06.2019 FR 1907034
(71) Demandeur: VERELEC, 38950 St Etienne de St Geoirs (FR)
(72) Inventeur: JOUBERT, Frédéric, 38260 Saint-Hilaire-de-la-Côte (FR)
(74) Mandataire: Dumont, Alban

(57) **Abrégé**

Dispositif de chauffage radiant (10) pour plants végétaux (12), le dispositif de chauffage radiant (10) comprenant un corps de chauffe (16) configuré pour être raccordé à une source d'alimentation électrique (11) et pour émettre un rayonnement de chauffe (162) au moins en partie dans le domaine infrarouge lorsque le corps de chauffe (16) est alimenté en électricité par la source d'alimentation électrique (11), l'émission du rayonnement de chauffe (162) se pratiquant selon un champ sensiblement directionnel dirigé selon une direction principale, le rayonnement de chauffe (162) ayant la faculté de chauffer l'intérieur d'un plant végétal (12) au moins en partie positionné dans le champ du rayonnement de chauffe (162).

## Description

### DOMAINE TECHNIQUE

La présente invention concerne un dispositif de chauffage radiant pour plants végétaux.

### ETAT DE LA TECHNIQUE ANTERIEURE

Dans le domaine de l'agriculture, pour maximiser la pousse des plants de légumes et des plants à vocation fruitière, ainsi que des plantes cultivées en pépinière, il est connu de devoir apporter à ces différents plants végétaux une certaine quantité de chaleur en plus de la lumière nécessaire à la photosynthèse. En particulier pour les plants de légumes ou à vocation fruitière, un tel apport permet une maturation contrôlée du fruit ou du légume produit.

Une solution connue actuellement consiste à réaliser cet apport de chaleur par le truchement d'un rayonnement émanant de tuyaux dans lesquels circule de l'eau ayant une température supérieure à 55°C.

Cette méthode connue n'est toutefois pas optimale.

Un premier inconvénient provient du fait que de telles installations ne sont pas fiables et réclament un temps et un coût nécessaires à l'entretien et la maintenance, car les tuyaux d'eau chaude ne sont pas robustes et doivent être contrôlés voire réparés fréquemment.

Un inconvénient supplémentaire provient de la nature même du rayonnement émis par ces tuyaux d'eau chaude, dont la longueur d'onde est inférieure à 1 micromètre. Un tel rayonnement a pour effet de chauffer l'environnement dans lequel le plant végétal est situé et cela n'a pour effet que de chauffer le plant, le fruit ou le légume que de manière superficielle.

Enfin, le rapport entre l'énergie nécessaire à fournir pour réaliser le chauffage par l'entremise de tuyaux d'eau chaude et le chauffage obtenu est malheureusement faible. Cela induit en outre que la consommation énergétique est susceptible d'être très élevées en fonction des résultats recherchés.

Un autre inconvénient provient du fait que, dans cette dernière solution, la part de convection est supérieure à la part de rayonnement ce qui est défavorable.

### EXPOSE DE L'INVENTION

La présente invention a pour but de proposer une solution de chauffage radiant pour plants végétaux répondant à tout ou partie des problématiques présentées ci-avant, notamment :
- fournir une solution de chauffage radiant procurant une source de chaleur efficace pour la croissance des plants végétaux, des légumes et des fruits produits ;
- proposer une solution de chauffage radiant procurant une source de chaleur efficace pour la maturation des légumes et des fruits produits ;
- proposer une solution de chauffage radiant qui soit fiable, robuste et économique, et ayant des besoins en maintenance très faibles ;
- proposer une solution de chauffage radiant offrant un bon rendement énergétique et thermique et une consommation énergétique faible.

A cet effet, il est proposé un dispositif de chauffage radiant pour plants végétaux, comprenant un corps de chauffe configuré pour être raccordé à une source d'alimentation électrique et pour émettre au moins un premier rayonnement de chauffe au moins en partie dans le domaine infrarouge lorsque le corps de chauffe est alimenté en électricité par la source d'alimentation électrique, l'émission du premier rayonnement de chauffe se pratiquant selon un champ sensiblement directionnel dirigé selon une direction principale, le premier rayonnement de chauffe ayant la faculté de chauffer l'intérieur d'au moins un premier plant végétal au moins en partie positionné dans le champ du premier rayonnement de chauffe.

Le dispositif de chauffage radiant peut mettre en œuvre les caractéristiques suivantes avantageuses, prises isolément ou en combinaison.

Dans une mise en œuvre du dispositif de chauffage radiant, le corps de chauffe est configuré de sorte que le champ du premier rayonnement de chauffe est contenu dans un angle d'émission de 60°.

Dans une mise en œuvre du dispositif de chauffage radiant, le corps de chauffe est configuré de sorte que le premier rayonnement de chauffe soit composé d'au moins une longueur d'onde ayant une valeur comprise dans une plage allant de 50 micromètres à 5 millimètres.

Dans une mise en œuvre du dispositif de chauffage radiant, le corps de chauffe comprend une couche support à forte émissivité et au moins une couche électro-conductrice à faible émissivité déposée sur la première couche support.

Dans une mise en œuvre du dispositif de chauffage, la couche électro-conductrice est une couche mince réalisée par un procédé de métallisation sous vide.

Dans une mise en œuvre du dispositif de chauffage, la couche électro-conductrice comprend un film réalisé dans une matière plastique ou isolant électrique incorporant au moins un fil électriquement conducteur.

Dans une mise en œuvre du dispositif de chauffage, la couche électro-conductrice présente une émissivité inférieure ou égale à 0,2.

Dans une mise en œuvre du dispositif de chauffage, la première couche support présente une émissivité supérieure ou égale à 0,9.

Dans une mise en œuvre du dispositif de chauffage, la première couche support est réalisée dans un matériau présentant une conductivité électrique inférieure ou égale à 10¹⁷ S/m.

Dans une mise en œuvre du dispositif de chauffage, la première couche support comporte au moins une paroi en verre plane sur laquelle la couche électro-conductrice est formée.

Dans une mise en œuvre du dispositif de chauffage, le dispositif de chauffage radiant comprend une sonde de température permettant de déterminer une température au niveau d'une surface d'appui sur laquelle le plan végétal repose durant son exposition au premier rayonnement de chauffe et une unité de pilotage permettant de piloter l'alimentation électrique du corps de chauffe par la source d'alimentation électrique de manière à asservir la température déterminée par la sonde de température en fonction d'une température de consigne.

Dans une mise en œuvre du dispositif de chauffage, la sonde de température appartient au groupe comprenant un thermocouple et un thermomètre laser.

Dans une mise en œuvre du dispositif de chauffage, l'unité de pilotage permet d'ajuster la température de consigne.

Dans une mise en œuvre du dispositif de chauffage, le dispositif de chauffage radiant comprend une source lumineuse indépendante du corps de chauffe et configurée pour émettre un rayonnement d'éclairage distinct du premier rayonnement de chauffe et apte à éclairer au moins tout ou partie du plant végétal sans le chauffer, le rayonnement d'éclairage étant composé d'au moins une longueur d'onde ayant une valeur comprise dans une plage allant de 380 à 750 nanomètres.

Dans une mise en œuvre du dispositif de chauffage, la source lumineuse comprend au moins une diode électroluminescente.

Dans une mise en œuvre du dispositif de chauffage, le corps de chauffe est configuré pour émettre un deuxième rayonnement de chauffe au moins en partie dans le domaine infrarouge lorsque le corps de chauffe est alimenté en électricité par la source d'alimentation électrique, l'émission du deuxième rayonnement de chauffe se pratiquant selon un champ sensiblement directionnel dirigé selon la direction principale dans un sens opposé au premier rayonnement de chauffe , le deuxième rayonnement de chauffe ayant la faculté de chauffer l'intérieur d'au moins un deuxième plant végétal au moins en partie positionné dans le champ du deuxième rayonnement de chauffe.

Dans une mise en œuvre du dispositif de chauffage, le corps de chauffe comprend une deuxième couche support à forte émissivité apte à émettre le deuxième rayonnement de chauffe et au moins une deuxième couche électro-conductrice à faible émissivité déposée sur la deuxième couche support.

### BREVE DESCRIPTION DES DESSINS

L'invention sera bien comprise à l'aide de la description qui suit de modes particuliers de réalisation de l'invention donnés à titre d'exemples non limitatifs et représentés sur les dessins annexés, dans lesquels :
[Fig. 1] est une vue schématique en coupe d'un mode de réalisation de dispositif de chauffage radiant pour plants végétaux selon l'invention.
[Fig. 2] est une vue schématique en coupe d'un mode de réalisation de dispositif de chauffage radiant pour plants végétaux selon l'invention.
[Fig. 3] est une vue schématique en coupe d'un mode de réalisation de dispositif de chauffage radiant pour plants végétaux selon l'invention.
[Fig. 4] est une vue schématique en coupe d'un mode de réalisation de dispositif de chauffage radiant pour plants végétaux selon l'invention.
[Fig. 5] est une vue schématique en coupe d'un mode de réalisation de dispositif de chauffage radiant pour plants végétaux selon l'invention.

### EXPOSE DETAILLE DE MODES DE REALISATION PARTICULIERS

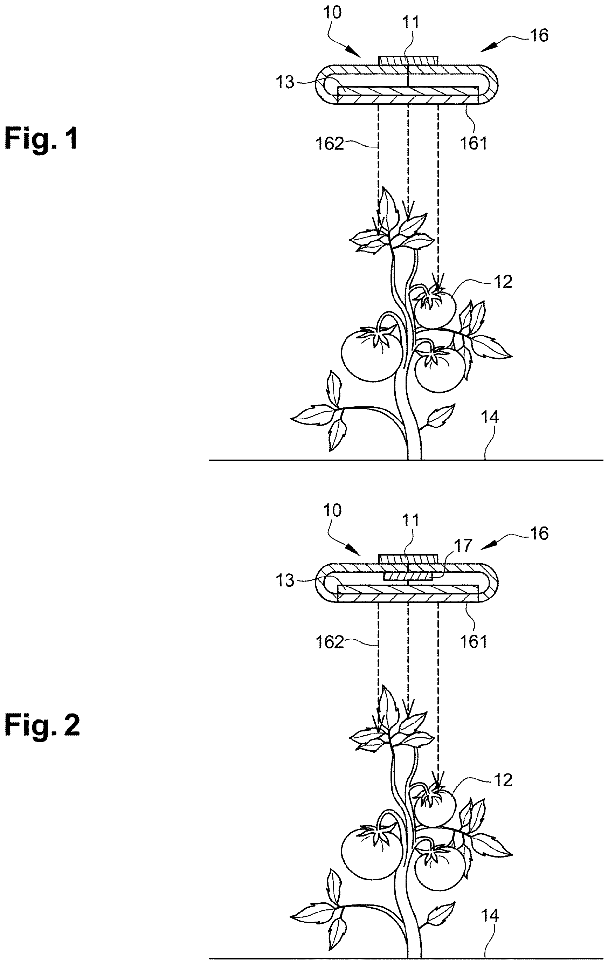

En référence aux figures 1 à 4 annexées telles que présentées sommairement ci-dessus, l'invention concerne essentiellement un dispositif de chauffage radiant 10 pour plants végétaux 12, notamment adapté pour optimiser certains paramètres de leur développement tels que la croissance des plants, la croissance des fruits et légumes produits, la maturation des fruits et légumes produits.

Le dispositif de chauffage radiant 10 comprend un corps de chauffe 16 configuré pour être raccordé à une source d'alimentation électrique 11.

Le corps de chauffe 16 est apte à émettre un premier rayonnement de chauffe 162 situé au moins en partie dans le domaine infrarouge long lorsqu'il est alimenté en électricité par la source d'alimentation électrique 11. Cette émission du premier rayonnement de chauffe 162 se pratique selon un champ sensiblement directionnel dirigé selon une direction principale. Compte tenu des longueurs d'ondes du rayonnement situé dans l'infrarouge long, le premier rayonnement de chauffe 162 présente avantageusement la faculté de chauffer l'intérieur des plants végétaux 12, des légumes et des fruits, qui sont au moins en partie positionnés dans le champ du rayonnement de chauffe 162.

Par le terme « sensiblement », il est entendu ici « à plus ou moins 10° prés ».

Par le terme « plants végétaux », il est entendu ici toute forme de plant végétal cultivable, comme par exemple des plants ayant vocation de produire des légumes, les plants destinés à produire des fruits, ou toute autre plante susceptible d'être cultivée en pépinière.

Le dispositif de chauffage radiant 10 décrit ici présente l'avantage de pouvoir chauffer en profondeur les plants végétaux 12 et les légumes ou les fruits produits. Cela permet d'accélère la croissance des plants végétaux 12 ainsi que des fruits ou des légumes produits et de contrôler la maturation des fruits ou des légumes produits. Du fait du caractère radiant et donc directionnel du dispositif de chauffage radiant 10, un plant végétal 12 donné peut ainsi être chauffé à une certaine température tout en permettant qu'un autre plant situé à proximité, dont les besoins en apport de chaleur seraient différents, puisse être chauffé à une température différente en son sein par le truchement d'un autre dispositif de chauffage radiant 10 ou d'une autre partie du même dispositif de chauffage radiant 10.

Un autre avantage réside dans la capacité à chauffer directement l'intérieur du plant végétal 12 et des légumes ou des fruits produits, ce qui permet d'optimiser le taux de croissance du plant végétal 12 et des fruits ou des légumes, contrairement à des solutions connues qui ne chauffent que l'environnement dans lequel le plant est installé.

Les plantes ont leurs fruits en bas de la serre, un endroit ou la lumière et la chaleur ne sont pas optimum, cette invention permet avantageusement d'apporter la chaleur exactement vers les fruits ou les légumes. ,

Dans un mode de réalisation particulier, le corps de chauffe 16 du dispositif de chauffage radiant 10 est configuré de sorte que le champ du rayonnement de chauffe 162 est contenu dans un angle d'émission ayant une valeur de 60° par exemple à partir du bord du corps de chauffe 16. Un tel angle d'émission faible est avantageux pour favoriser une sélectivité de chauffage accrue et augmenter l'efficacité car tout le rayonnement est cantonné globalement dans une direction.

Dans un mode de réalisation particulier, le corps de chauffe 16 du dispositif de chauffage radiant 10 est configuré de sorte que le premier rayonnement de chauffe 162 est composé d'au moins une longueur d'onde ayant une valeur comprise dans une plage allant de 50 micromètres à 5 millimètres. Ceci est avantageux car ces longueurs d'ondes pénètrent facilement dans le plant végétal 12 et dans les légumes et les fruits produits, afin de créer un effet de chauffage directement à l'intérieur sans pour autant chauffer de façon intense le plant végétal 12, les fruits ou les légumes en surface. Un autre avantage de ce mode de réalisation est que le caractère radiant du dispositif de chauffage 10 permet de chauffer directement l'intérieur du plant végétal 12, des fruits et des légumes, à une profondeur allant jusqu'à 6 cm, même en extérieur et conditions ventées.

Dans un mode de réalisation particulier, le corps de chauffe 16 comprend une première couche support 161 à forte émissivité, c'est-à-dire ici supérieure à 0,85 et préférentiellement supérieure à 0,9, et au moins une première couche électro-conductrice 13 à faible émissivité, c'est-à-dire ici inférieure à 0,2, et déposée sur la première couche support 161. L'émissivité s'entend de la capacité d'un matériau réel à émettre un rayonnement thermique. Elle est évaluée par rapport à celle du corps noir. Ce dernier est un corps purement fictif permettant d'obtenir les lois de base du rayonnement thermique. Il décrit un objet idéal dont le spectre électromagnétique ne dépend que de sa température, c'est-à-dire, un objet qui réémet la totalité de son énergie à toutes les longueurs d'ondes. Les objets réels, eux, réémettent une quantité d'énergie radiative toujours inférieure à celle d'un corps noir à la même température. L'émissivité d'une surface représente le rapport entre la quantité d'énergie émise par la surface et l'énergie émise par un corps noir porté à la même température. L'émissivité renseigne donc sur l'aptitude d'un matériau à émettre un rayonnement, ici infrarouge. L'émissivité est donc sans unité et comprise entre 0 et 1 (1 étant la valeur pour un corps noir parfait).

La première couche support 161 est réalisée par exemple dans un matériau peu conducteur, voire isolant électriquement, comme du verre ou de la céramique. Préférentiellement, la première couche support 161 est résistante aux chocs notamment thermiques et physiques et comprend un verre thermiquement résistant, comme par exemple un borosilicate ou une vitrocéramique.

Dans un mode de réalisation particulier illustré sur les figures 1 à 5, la première couche support 161 comporte au moins une paroi en verre plane sur laquelle la première couche électro-conductrice 13 est formée. La paroi en verre plane permet d'améliorer le renvoi vers le plant végétal 12, par réflexion sur la paroi plane, des rayonnements infra-rouges générés directement ou indirectement par le plant végétal 12. La paroi plane permet en outre d'obtenir avantageusement un flux de rayonnement directif vers le plant végétal 12.

Dans un exemple non limitatif, la première couche support 161 est réalisée dans un matériau présentant une conductivité électrique inférieure ou égale à 10¹⁷ S/m. Ceci permet notamment de générer des puissances surfaciques comprises entre 150 W/m² et 4000 W/m².

Dans un mode de réalisation, la première couche électro-conductrice 13 est une couche mince réalisée par un procédé de métallisation sous vide. Les procédés de métallisation sous vide utilisés peuvent être par exemple l'évaporation ou le dépôt assisté par plasma ou le dépôt par magnétron. L'épaisseur de la première couche électro-conductrice 13 est comprise entre 500 et 7000 angströms. Le dépôt de la première couche électro-conductrice 13 peut ne pas être uniforme sur toute la surface de la première couche support 161. La première couche électro-conductrice 13 peut être composée de plusieurs couches superposées d'un ou plusieurs matériaux conducteurs. Le dépôt en couche mince permet notamment d'obtenir l'émission d'un flux de rayonnement homogène. Des matériaux pour réaliser cette couche sont, par exemple, du chrome ou de l'oxyde de chrome ou un alliage de nickel et de chrome. La première couche électro-conductrice 13 peut, de par sa nature métallique, être réflectrice, ce qui est avantageux pour rediriger le rayonnement infra-rouge induit par le plant végétal 12, et les réflexions diverses, vers le plant végétal 12. Avantageusement, cette architecture permet d'obtenir une efficacité énergétique élevée et permet donc des économies substantielles à l'utilisation. La couche mince est ainsi avantageusement réflectrice de lumière ce qui de par son aspect miroir augmente la quantité de lumière réfléchie.

Dans un exemple particulier non représenté, la première couche électro-conductrice 13 comprend un film réalisé dans une matière plastique ou isolant électrique incorporant au moins un fil électriquement conducteur. Ce film peut être collé directement sur la face arrière de la première couche support 161.

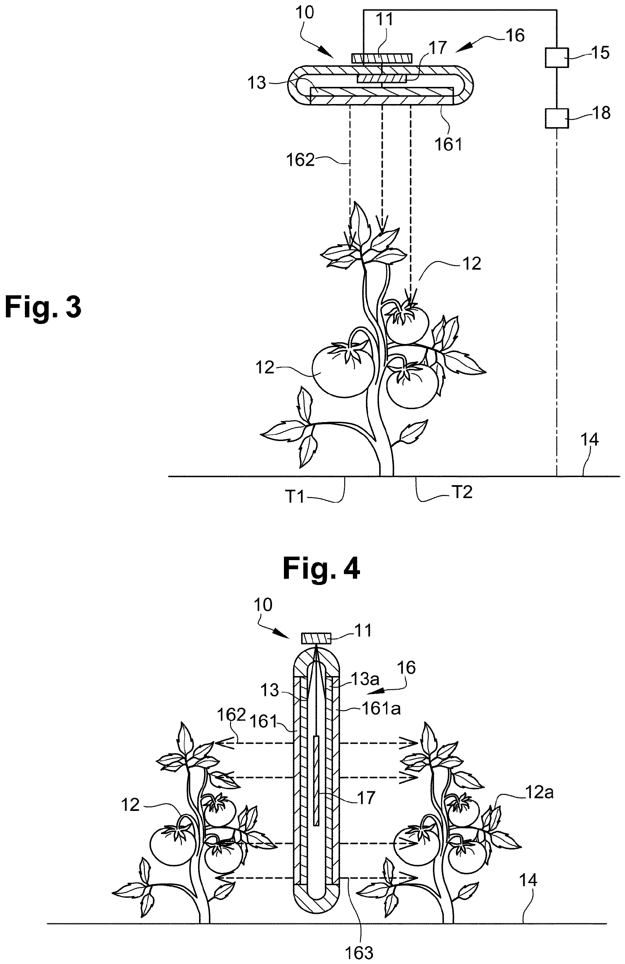

Dans un mode de réalisation particulier et avantageux illustré sur la figure 3, le dispositif de chauffage radiant 10 comprend une sonde de température 18 permettant de déterminer une température T1 au niveau d'une surface d'appui 14 sur laquelle un plant végétal 12 repose durant son exposition au rayonnement de chauffe 162. La surface d'appui 14 est par exemple le sol. La sonde de température 18 peut par exemple être un thermocouple ou un thermomètre laser. Le dispositif de chauffage radiant 10 comprend également une unité de pilotage 15 permettant de piloter l'alimentation électrique du corps de chauffe 16 par la source d'alimentation électrique 11. De cette façon, il est possible d'asservir la température T1 déterminée par la sonde de température 18 en fonction d'une température de consigne T2. La température de consigne T2 peut être comprise avantageusement entre 55°C et 15°C.

Dans un exemple de ce mode de réalisation, l'unité de pilotage 15 permet d'ajuster la température de consigne T2, notamment en fonction de critères prédéterminés associés au plant 12 exposé au premier rayonnement de chauffe 162. En effet, les besoins en chauffage peuvent évoluer tout au long de la croissance du plant 12 et d'un plant 12 à l'autre.

Dans un mode de réalisation illustré sur la figure 4, le corps de chauffe 16 est configuré pour émettre un deuxième rayonnement de chauffe 163 au moins en partie dans le domaine infrarouge lorsque le corps de chauffe 16 est alimenté en électricité par la source d'alimentation électrique 11. L'émission du deuxième rayonnement de chauffe 163 se pratique selon un champ sensiblement directionnel dirigé selon la direction principale dans un sens opposé au premier rayonnement de chauffe 162. Le deuxième rayonnement de chauffe 163 a la faculté de chauffer l'intérieur d'au moins un deuxième plant végétal 12a au moins en partie positionné dans le champ du deuxième rayonnement de chauffe 163.

Comme cela est illustré sur les figures 2 à 4, le dispositif de chauffage radiant 10 peut comprendre une source lumineuse 17 dont la commande est indépendante du corps de chauffe 16. La source lumineuse 17 est configurée pour émettre un rayonnement d'éclairage distinct du premier rayonnement de chauffe 162 et/ou du deuxième rayonnement de chauffe 163. Elle est également apte à éclairer au moins tout ou partie du plant végétal 12 sans le chauffer. Le rayonnement d'éclairage est notamment composé d'au moins une longueur d'onde ayant une valeur comprise dans une plage allant de 380 à 750 nanomètres. Le rayonnement d'éclairage ainsi produit permet d'éclairer le plant végétal 12 par une lumière visible, par exemple en reproduisant au moins en partie l'éclairage naturel du soleil afin d'améliorer la photosynthèse du plant végétal 12.

La source lumineuse 17 peut comprendre au moins une diode électroluminescente. Ceci est avantageux pour permettre de réduire les coûts d'exploitation et/ou permettre également de reproduire le plus fidèlement possible le spectre lumineux naturel ou au contraire favoriser une plage de longueur d'onde propice à la photosynthèse ou à la maturation des fruits. Les diodes électroluminescentes ont également l'avantage de ne pas ou peu chauffer, ce qui permet de contrôler plus précisément le chauffage.

En référence à la figure 4, le corps de chauffe 16 peut comprendre une deuxième couche support 161a à forte émissivité apte à émettre le deuxième rayonnement de chauffe 163 dont les propriétés sont identiques ou différentes du premier rayonnement de chauffe 162 et au moins une deuxième couche électro-conductrice 13a à faible émissivité déposée sur la deuxième couche support 161a. La deuxième couche support 161a et la deuxième couche électro-conductrice 13a peuvent être ainsi agencées sur une face du dispositif de chauffage radiant 10 opposée à la face où sont agencées la première couche support 161 et la première couche électro-conductrice 13. Cela permet avantageusement de pouvoir chauffer plusieurs plants végétaux 12 en même temps et sur toute leur hauteur.

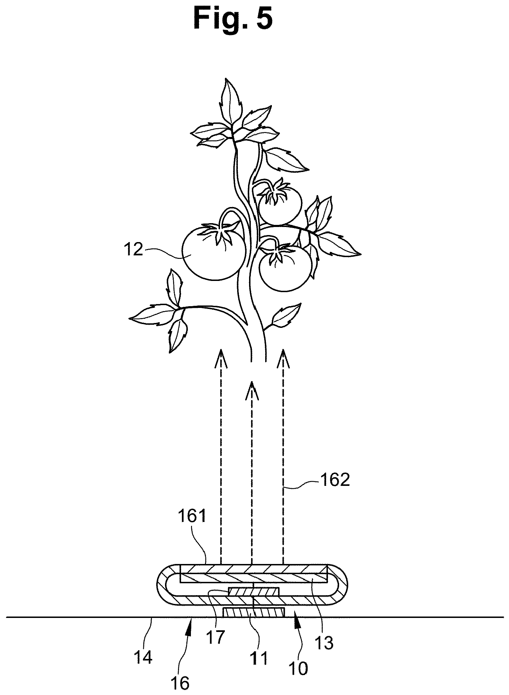

Dans un exemple de réalisation illustré sur la figure 5, le dispositif de chauffage radiant 10 tel que décrit dans un des exemples précédents peut être agencé pour irradier le premier rayonnement infrarouge de chauffe 162 dans une direction globalement opposée au sol de sorte à irradier directement les fruits ou les légumes par le bas. Ceci est avantageux car les feuilles étant en général situées au-dessus des fruits et donc il en ressort que la quantité de rayonnement reçue par les fruits ou les légumes est largement augmentée car non ombrée par les feuilles.

Dans un exemple non illustré, le dispositif de chauffage radiant 10 présente une épaisseur totale inférieure à 4 cm. Ceci permet d'obtenir des dimensions du dispositif de chauffage radiant 10 supérieure à 1m².

L'architecture globale du dispositif de chauffage radiant 10 permet avantageusement que les matériaux utilisés soient recyclables ou recyclés lors de leur emploi dans le dispositif de chauffage radiant 10. Ainsi, un tel dispositif de chauffage radiant 10 permet de répondre aux critères ETV de l'anglais « European Technology Verification ».

Le dispositif de chauffage radiant 10 qui vient d'être décrit est également avantageusement étanche, durable et robuste dans son utilisation, et nécessite un entretien très faible. Le rendement énergétique et thermique est faible et la consommation énergétique est, pour un nombre de plants végétaux traités identique, nettement plus faible que celle des solutions existantes présentées ci-avant.

Bien entendu, l'invention n'est pas limitée aux exemples et modes de réalisation représentés et décrits ci-avant, mais en couvre au contraire toutes les variantes et combinaisons.

## Revendications

1. Dispositif de chauffage radiant (10) pour plants végétaux (12), comprenant un corps de chauffe (16) configuré pour être raccordé à une source d'alimentation électrique (11) et pour émettre au moins un premier rayonnement de chauffe (162) au moins en partie dans le domaine infrarouge lorsque le corps de chauffe (16) est alimenté en électricité par la source d'alimentation électrique (11), l'émission du premier rayonnement de chauffe (162) se pratiquant selon un champ sensiblement directionnel dirigé selon une direction principale, le premier rayonnement de chauffe (162) ayant la faculté de chauffer l'intérieur d'au moins un premier plant végétal (12) au moins en partie positionné dans le champ du premier rayonnement de chauffe (162).

2. Dispositif de chauffage radiant (10) selon la revendication 1, dans lequel le corps de chauffe (16) est configuré de sorte que le champ du premier rayonnement de chauffe (162) est contenu dans un angle d'émission de 60°.

3. Dispositif de chauffage radiant (10) selon l'une des revendications 1 ou 2, dans lequel le corps de chauffe (16) est configuré de sorte que le premier rayonnement de chauffe (162) soit composé d'au moins une longueur d'onde ayant une valeur comprise dans une plage allant de 50 micromètres à 5 millimètres.

4. Dispositif de chauffage radiant (10) selon l'une des revendications 1 à 3, dans lequel le corps de chauffe (16) comprend une couche support (161) à forte émissivité et au moins une couche électro-conductrice (13) à faible émissivité déposée sur la première couche support (161).

5. Dispositif de chauffage radiant (10) selon la revendication 4, dans lequel la couche électro-conductrice (13) est une couche mince réalisée par un procédé de métallisation sous vide.

6. Dispositif de chauffage radiant (10) selon la revendication 4, dans lequel la couche électro-conductrice (13) comprend un film réalisé dans une matière plastique ou isolant électrique incorporant au moins un fil électriquement conducteur.

7. Dispositif de chauffage radiant (10) selon l'une des revendications 4 à 6, dans lequel la couche électro-conductrice (13) présente une émissivité inférieure ou égale à 0,2.

8. Dispositif de chauffage radiant (10) selon l'une des revendications 4 à 7, dans lequel la première couche support (161) présente une émissivité supérieure ou égale à 0,9.

9. Dispositif de chauffage radiant (10) selon l'une des revendications 4 à 8, dans lequel la première couche support (161) est réalisée dans un matériau présentant une conductivité électrique inférieure ou égale à 10¹⁷ S/m.

10. Dispositif de chauffage radiant (10) selon l'une des revendications 4 à 9, dans lequel la première couche support (161) comporte au moins une paroi en verre plane sur laquelle la couche électro-conductrice (13) est formée.

11. Dispositif de chauffage radiant (10) selon l'une des revendications 1 à 10, dans lequel le dispositif de chauffage radiant (10) comprend une sonde de température (18) permettant de déterminer une température (T1) au niveau d'une surface d'appui (14) sur laquelle le plan végétal (12) repose durant son exposition au premier rayonnement de chauffe (162) et une unité de pilotage (15) permettant de piloter l'alimentation électrique du corps de chauffe (16) par la source d'alimentation électrique (11) de manière à asservir la température (T1) déterminée par la sonde de température (18) en fonction d'une température de consigne (T2).

12. Dispositif de chauffage radiant (10) selon la revendication 11, dans lequel la sonde de température (18) appartient au groupe comprenant un thermocouple et un thermomètre laser.

13. Dispositif de chauffage radiant (10) selon l'une des revendications 11 ou 12, dans lequel l'unité de pilotage (15) permet d'ajuster la température de consigne (T2).

14. Dispositif de chauffage radiant (10) selon l'une des revendications 1 à 13 dans lequel le dispositif de chauffage radiant (10) comprend une source lumineuse (17) indépendante du corps de chauffe (16) et configurée pour émettre un rayonnement d'éclairage distinct du premier rayonnement de chauffe (162) et apte à éclairer au moins tout ou partie du plant végétal (12) sans le chauffer, le rayonnement d'éclairage étant composé d'au moins une longueur d'onde ayant une valeur comprise dans une plage allant de 380 à 750 nanomètres.

15. Dispositif de chauffage radiant (10) selon la revendication 14 dans lequel, la source lumineuse (17) comprend au moins une diode électroluminescente.

16. Dispositif de chauffage radiant (10) selon l'une des revendications 1 à 15 dans lequel le corps de chauffe (16) est configuré pour émettre un deuxième rayonnement de chauffe (163) au moins en partie dans le domaine infrarouge lorsque le corps de chauffe (16) est alimenté en électricité par la source d'alimentation électrique (11), l'émission du deuxième rayonnement de chauffe (163) se pratiquant selon un champ sensiblement directionnel dirigé selon la direction principale dans un sens opposé au premier rayonnement de chauffe (162), le deuxième rayonnement de chauffe (163) ayant la faculté de chauffer l'intérieur d'au moins un deuxième plant végétal (12a) au moins en partie positionné dans le champ du deuxième rayonnement de chauffe (163).

17. Dispositif de chauffage radiant (10) selon la revendication 16, dans lequel le corps de chauffe (16) comprend une deuxième couche support (161a) à forte émissivité apte à émettre le deuxième rayonnement de chauffe (163) et au moins une deuxième couche électro-conductrice (13a) à faible émissivité déposée sur la deuxième couche support (161a).
